# EUROPÄISCHE PATENTANMELDUNG

(11) **EP 0 567 777 A1**
(43) Veröffentlichungstag der Anmeldung: **03.11.1993**
(21) Anmeldenummer: 93104868.0
(22) Anmeldetag: 24.03.1993
(51) Int. Cl.: F27B 7/22, F16C 13/00

(54) **Kippbewegliche Laufrollenlagerung**

(30) Priorität: 28.04.1992 DE 4213916
(71) Anmelder: KRUPP POLYSIUS AG, D-59269 Beckum (DE)
(72) Erfinder: Auf dem Venne, Johannes, Ing. (grad.), W-4722 Ennigerloh (DE); Pingel, Herbert, Dipl.-Ing., W-4724 Wadersloh 2 (DE); Giesemann, Reinhard, Dipl.-Ing., W-4834 Harsewinkel (DE); Peterwerth, Bernhard, Dipl.-Ing., W-4518 Bad Laer (DE)
(74) Vertreter: Tetzner, Volkmar, Dr.-Ing. Dr. jur.

(57) **Zusammenfassung**

Die Erfindung betrifft eine kippbewegliche Laufrollenlagerung für die Abstützung eines Drehrohres (3) und enthält eine frei drehbar gelagerte Laufrolle (2) sowie eine Laufrollen-Tragkonstruktion (8), die gegenüber einer ortsfesten Stützfläche (9) durch ein viergliedriges Gelenkgetriebe (10) kippbeweglich abgestützt ist, dessen zwei Schwingen (11,12) derart angeordnet sind, daß der Drehpunkt (13) des Gelenkgetriebes (10) im Bereich des Schnittpunktes der Kontaktlinie (14) zwischen Laufrolle (2) und Laufring (2a) mit der vertikalen Laufrollen-Mittelachse (2b) liegt. Diese Ausbildung ermöglicht eine Kompensation von Schrägstellungen des Drehrohr-Laufringes sowie gleichzeitig eine deutliche Herabsetzung bzw. weitgehende Vermeidung unerwünschter Axialkräfte aus zusätzlichen Längsbewegungen des Drehrohres (3).

## Beschreibung

Die Erfindung betrifft eine kippbewegliche Laufrollenlagerung für die Abstützung eines Drehrohres, entsprechend dem Oberbegriff des Anspruches 1.

Bei den hier in Frage kommenden Drehrohren handelt es sich um solche relativ großen Durchmessers und großer Länge, wie es insbesondere bei Drehrohröfen, Rohrkühlern, Mischtrommeln und dergleichen der Fall ist. Diese relativ großen Drehrohre werden mit nicht zu vermeidenden Montageungenauigkeiten aufgebaut, und sie weisen mehr oder weniger starke Verkrümmungen ihrer zylindrischen Mäntel auf, was zu einer Taumelbewegung ihrer Umfangslaufflächen führt, die im allgemeinen durch auf dem Drehrohrmantel angebrachte Laufringe gebildet werden. Eine Taumelbewegung dieser Umfangslaufflächen bringt ein schlechtes Tragverhalten zwischen dieser Umfangslauffläche (Laufring) und den sie abstützenden Laufrollen der Laufrollenlagerung mit sich. Die sich daraus ergebenden örtlichen Lastüberhöhungen an den Kontaktflächen zwischen den Laufrollen und den Umfangslaufflächen des Drehrohres führen zu Beschädigungen der Laufflächen.

Zur Vermeidung dieser Beschädigungen sind bereits unterschiedliche Vorschläge gemacht worden (z.B. DE-C-27 36 111, DE-A-28 01 588 und DE-C-35 40 590), bei denen eine frei drehbar gelagerte Laufrolle über eine Rollenachse von einer Tragkonstruktion getragen wird, die um einen etwa in Höhe der Laufrollenachse oder darunter liegenden Drehpunkt kippbeweglich gegenüber einer ortsfesten Stützfläche abgestützt ist. Durch diese bekannten kippbeweglichen Laufrollenlagerungen können durch Montageungenauigkeiten und verkrümmte Drehrohrmäntel hervorgerufene Schrägstellungen der Umfangslaufflächen (z.B. Laufringoberflächen) durch eine Reaktion der entsprechenden Laufrolle bzw. Laufrollen zwar ausgeglichen werden. Probleme bereitet aber die Schiefstellung der jeweiligen Umfangslauffläche des Drehrohres zur gedachten Drehrohr-Längsmittelachse, wodurch während jedes Umlaufes zusätzliche Längsbewegungen in Richtung dieser Mittelachse auftreten. Diese Längsbewegungen erzeugen nämlich im Bereich der Kontaktflächen Zwischen Laufrollen-Außenumfangsfläche und Drehrohr-Umfangslauffläche Axialkräfte, deren Größe vor allem durch die vertikale Auflagerkraft und den Reibfaktor bestimmt wird. Durch die Auswirkungen dieser Axialkräfte kann es an den Laufrollen-Außenumfangsflächen und den Drehrohr-Umfangslaufflächen (bzw. Laufringumfangsflächen) zu erheblichen örtlichen Lastüberhöhungen kommen, die zu Beschädigungen dieser Umfangs- bzw. Laufflächen führen können.

Der Erfindung liegt daher die Aufgabe zugrunde, eine kippbewegliche Laufrollenlagerung der im Oberbegriff des Anspruches 1 vorausgesetzten Art zu schaffen, durch die sowohl die sich aus Montageungenauigkeiten und einen verkrümmten Drehrohrmantel ergebenden Schrägstellungen der Drehrohr-Umfangslaufflächen (bzw. Laufringe) ausgeglichen als auch die durch Schiefstellungen dieser Drehrohr-Umfangslaufflächen auftretenden zusätzlichen Längsbewegungen des Drehrohres zumindest auf ein vertretbares Minimum herabgesetzt werden.

Diese Aufgabe wird erfindungsgemäß durch die im Kennzeichen des Anspruches 1 angegebenen Merkmale gelöst.

Vorteilhafte Ausgestaltungen der Erfindung sind Gegenstand der Unteransprüche.

Bei den der Erfindung zugrundeliegenden Untersuchungen hat sich gezeigt, daß dem Abstand zwischen der Kontaktfläche bzw. Kontaktlinie zwischen Laufrollen-Außenumfangsfläche und Drehrohr-Umfangslauffläche einerseits und dem Drehpunkt der kippbeweglichen Laufrollenlagerung (mit Laufrolle und ihrer Tragkonstruktion) eine besondere Bedeutung zukommt. Durch diesen Abstand ergibt sich ein Hebelarm um den genannten Drehpunkt. Je größer dieser Hebelarm um den Drehpunkt ist, desto größer wird ein um diesen Drehpunkt wirkendes Drehmoment, und je größer dieses Drehmoment ist, desto größer wird auch die zusätzlich an der genannten Kontaktfläche bzw. Kontaktlinie auftretende Belastung und somit wiederum die Belastung von Laufrolle und Drehrohr-Umfangslauffläche (bzw. Laufring).

Betrachtet man hierzu nochmals die eingangs erläuterten bekannten Ausführungen, bei denen der Drehpunkt der kippbeweglichen Laufrollenlagerung etwa in Höhe der Laufrollen-Drehachse oder deutlich darunter liegt, so ergeben sich dort relativ große und sehr große Hebelarme zwischen der genannten Kontaktlinie (= Kraftangriffspunkt) und dem Drehpunkt, was wiederum zu relativ großen Drehmomenten und damit zu der erheblichen Gefahr von örtlichen Lastüberhöhungen und damit verbundenen Beschädigungen der miteinander in Berührung stehenden Oberflächen führt.

Demgegenüber ist bei der erfindungsgemäßen Laufrollenlagerung die kippbewegliche Abstützung in Form eines viergliedrigen Gelenkgetriebes mit der Tragkonstruktion (für die Laufrolle) und der ortsfesten Stützfläche sowie zwei gelenkig dazwischen angebrachten, kurbelartigen Schwingen ausgebildet. Diese beiden Schwingen sind dabei in der Weise angeordnet, daß der Drehpunkt des Gelenkgetriebes im Bereich des Schnittpunktes liegt, der durch die Kontaktlinie zwischen Laufrollen-Außenumfangsfläche und Drehrohr-Umfangslauffläche (bzw. -laufring) einerseits und die vertikale Laufrollen-Mittelachse andererseits gebildet wird. Dieser Schnittpunkt der in der Grundstellung horizontalen Kontaktlinie mit der vertikalen Laufrollen-Mittelachse bildet einen Kraftangriffspunkt, in dem alle wesentlichen auftretenden Kräfte, nämlich die vertikale Gewichtsbelastung seitens des Drehrohres und die aus einem axialen Drehrohrschub und der Reibung resultierende horizontale Kraft, angreifen. Durch die erfindungsgemäße Ausbildung und Anordnung des viergliedrigen Gelenkgetriebes als kippbewegliche Abstützung wird der Drehpunkt dieser Laufrollenlagerung ganz in die Nähe des genannten Schnittpunktes oder direkt in diesen Schnittpunkt gelegt, so daß hier gegenüber den erläuterten bekannten Ausführungen der Hebelarm zwischen dem Drehpunkt und dem Schnittpunkt (Kraftangriffspunkt) ganz klein oder gar Null wird, so daß dementsprechend auch ein sich daraus bei Schiefstellungen der Drehrohr-Umfangslauffläche bzw. des Drehrohr-Laufringes ergebendes Drehmoment auf ein Minimum herabgesetzt wird bzw. überhaupt nicht auftritt, was wiederum dazu führt, daß örtliche Lastüberhöhungen vernachlässigbar klein werden oder überhaupt nicht auftreten können.

Die Erfindung sei nachfolgend anhand der Zeichnung näher erläutert. In dieser Zeichnung zeigen
- Fig.1: eine teilweise geschnittene Längsansicht einer erfindungsgemäßen Laufrollenlagerung mit einer ersten Ausführungsform eines Gelenkgetriebes für die kippbewegliche Abstützung;
- Fig.2: eine Längsschnittansicht der Laufrollenlagerung, ähnlich der Fig.1, jedoch bei einer zweiten Ausführungsform des abstützenden Gelenkgetriebes;
- Fig.3: eine vereinfachte Queransicht einer Laufrollenstation mit zwei Laufrollen.

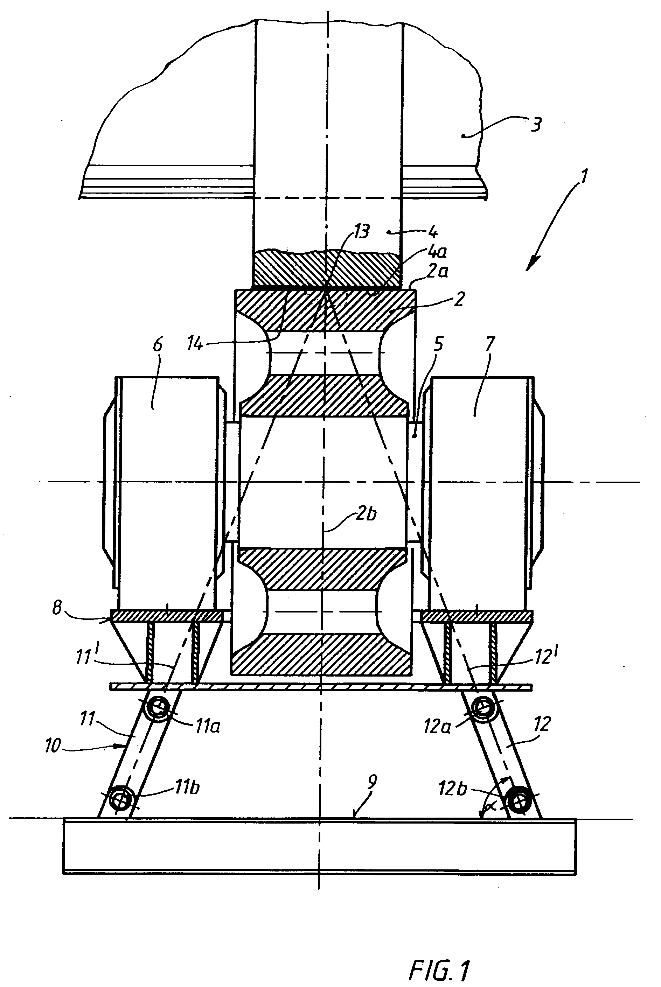

In Fig.1 ist eine erste Ausführungsform der erfindungsgemäßen kippbeweglichen Laufrollenlagerung 1 veranschaulicht. Diese Laufrollenlagerung 1 enthält eine frei drehbar gelagerte Laufrolle 2 und bildet dabei eine Art selbsteinstellende Rollenstütze für einen zugeordneten Längsabschnitt eines nur angedeuteten Drehrohres 3. Auf der Außenumfangsfläche (Lagerfläche) 2a dieser Laufrolle 2 stützt sich eine Umfangslauffläche des Drehrohres 3 abwälzend ab, wobei diese Umfangslauffläche direkt auf dem zylindrischen Mantel des Drehrohres 3 ausgebildet sein kann, vorzugsweise jedoch - wie an sich bekannt - durch einen auf dem Drehrohrmantel angebrachten Laufring 4 bzw. dessen Umfangslauffläche gebildet wird.

Die Laufrolle 2 ist auf einer Rollenachse 5 angebracht, die an ihren Enden frei drehbar in Lagern 6, 7 gelagert ist, die in üblicher Weise durch Wälzlager oder Gleitlager gebildet sein können. Über diese Rollenachse 5 und deren Lager 6, 7 wird die Laufrolle 2 von einer Tragkonstruktion 8 getragen, die durch eine profilrahmenartige Unterstützungskonstruktion gebildet ist.

Die Laufrollen-Tragkonstruktion 8 ist ihrerseits gegenüber einer ortsfesten Stützfläche kippbeweglich abgestützt, wobei diese ortsfeste Stützfläche durch eine - gegebenenfalls ebenfalls profilrahmenartige - Fundamentplatte 9 gebildet wird. Diese kippbewegliche Abstützung ist in Form eines ebenen, viergliedrigen Gelenkgetriebes 10 ausgebildet, zu dem als obere Koppel die Laufrollen-Tragkonstruktion 8 und als untere Koppel die die ortsfeste Stützfläche bildende Fundamentplatte 9 sowie zwei zwischen diesen beiden Teilen (8, 9) gelenkig angebrachte, kurbelartige Schwingen 11, 12 gehören, die in Form von einzelnen Tragstützen ausgebildet sind und an ihren freien Enden Schwenkgelenke 11a, 11b bzw. 12a, 12b aufweisen, über die sie jeweils einerseits mit der Laufrollen-Tragkonstruktion 8 und andererseits mit der ortsfesten Fundamentplatte 9 gelenkig verbunden sind. Diese Schwingen 11, 12 sind in ihrer Länge frei wählbar, und zwar zweckmäßig in Anpassung an die jeweilige Einbausituation, Lagerungsgröße usw.. Die Schwingen 11, 12 weisen dabei jedoch in Bezug auf das durch das Gelenkgetriebe 10 gebildete Koppelviereck vorzugsweise gleich große Längen auf, und sie sind in ihrer Grundstellung unter gleichen Winkeln (Winkel α in Fig.1) derart gegeneinander geneigt, daß ihre gedachten Verlängerungslinien 11', 12' sich im Drehpunkt 13 des Gelenkgetriebes 10 schneiden. Dies bedeutet, in anderen Worten, daß der Drehpunkt 13 des Gelenkgetriebes 10 - wie in Fig.1 veranschaulicht - im Bereich des Schnittpunktes liegt bzw. mit dem Schnittpunkt zusammenfällt, der einerseits durch die Kontaktlinie 14 zwischen der Laufrollen-Außenumfangsfläche 2a und der Laufring-Außenumfangsfläche 4a sowie andererseits durch die vertikale Laufrollen-Mittelachse 2b gebildet ist.

Durch diese kippbewegliche Abstützung in Form des Gelenkgetriebes 10 für die Laufrollen-Tragkonstruktion 8 und damit der ganzen Laufrollenlagerung werden zum einen Schrägstellungen des Laufringes 4 bzw. seiner Umfangsfläche 4a durch die Reaktion der zugehörigen Laufrollen 2 wirksam kompensiert, und zum andern werden auch durch eine Schiefstellung des Laufringes 4 gegenüber der Drehrohrlängsachse bei der Drehbewegung auftretende zusätzliche Längsbewegungen (Axialbewegungen) in vorteilhafter Weise kompensiert, indem zwischen dem Drehpunkt 13 der Laufrollenlagerung 1 und dem im Schnittpunkt zwischen Kontaktlinie 14 und vertikaler Laufrollen-Mittelachse 2b auftretenden Kraftangriffspunkt nur ein äußerst kleiner oder überhaupt kein Hebelarm vorhanden ist, so daß dementsprechend auch vernachlässigbar kleine oder überhaupt keine Drehmomente in diesen Bereichen auftreten können, die aus Axialkräften bei Längsbewegungen bzw. Schiefstellungen des Laufringes 4 auftreten können.

Schwenkgelenke 11a, 11b bzw. 12a, 12b an den kurbelartigen Schwingen können wenigstens teilweise, im Beispiel der Fig.1 jedoch alle durch Wälz-, Gleit- und/oder Elastomerlager gebildet sein, wie es in dieser Fig.1 angedeutet ist.

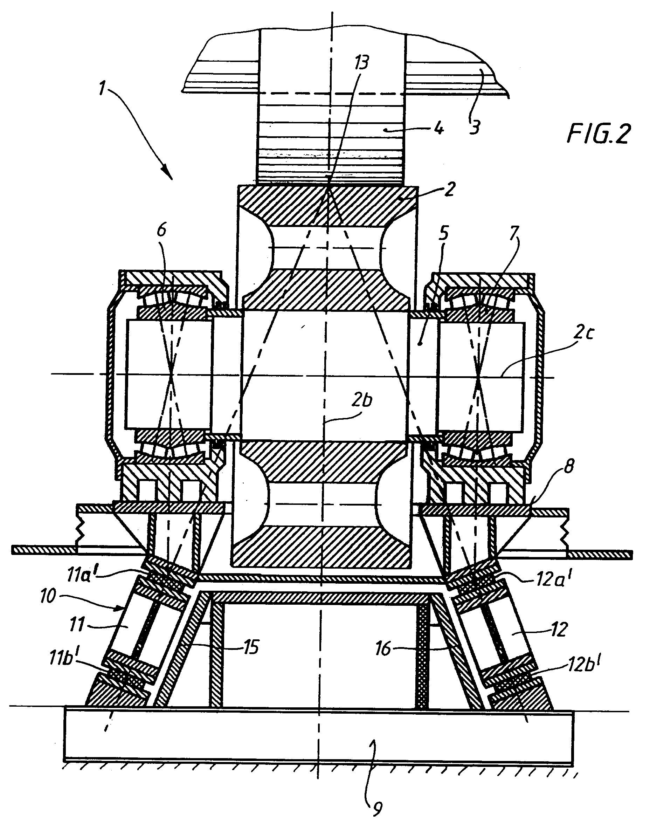

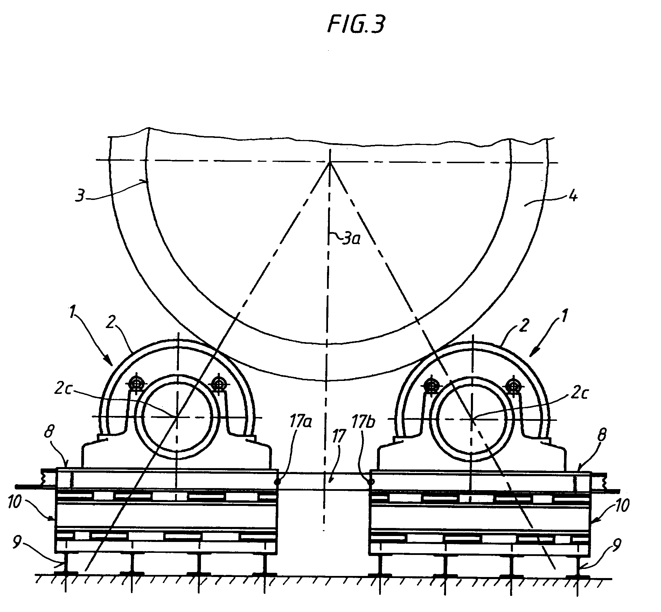

Fig.2 veranschaulicht eine Ausführungsvariante der zuvor anhand Fig.1 erläuterten Laufrollenlagerung 1, wobei diese Ausführungsvariante in der Hauptsache eine zweite Ausführungsform des viergliedrigen Gelenkgetriebes 10 aufweist. Alle gleichartigen Teile in den Fig.1 und 2 sind daher der Einfachheit halber mit denselben Bezugszeichen versehen, so daß sich eine nochmalige detaillierte Beschreibung dieser Teile erübrigt.

Auch bei dieser Ausführungsvariante gemäß Fig.2 bilden somit die Laufrollen-Tragkonstruktion 8 und die ortsfeste Fundamentplatte 9 sowie die zwei gelenkig dazwischen angebrachten, kurbelartigen Schwingen 11, 12 das viergliedrige Gelenkgetriebe 10 für die kippbewegliche Abstützung der die Laufrolle 5 tragenden Tragkonstruktion 8 und somit der Laufrollenlagerung 1, und zwar mit gleichartiger Wirkung und Funktion, wie es anhand Fig.1 im einzelnen erläutert ist.

Im Unterschied zur Ausführung gemäß Fig.1 sind bei dieser Ausführungsvariante die Schwenkgelenke 11a', 11b' an der Schwinge 11 und die Schwenkgelenke 12a', 12b' an der Schwinge 12 jedoch wenigstens teilweise, vorzugsweise alle in Form von elastischen Lagerpaketen ausgebildet, bei denen es sich um handelsübliche Elastomerlager (mit Gummi- oder gummiartigen Lagerpuffern, gegebenenfalls aber auch um andere geeignete Federlager) handeln kann.

Bei der Ausführungsvariante gemäß Fig.2 ist ferner angedeutet, daß auf der ortsfesten Fundamentplatte 9 zwischen den beiden Schwingen 11, 12 noch in geeigneter Weise zwei Stützen 15, 16 bzw. ein hierdurch gebildeter Stützenaufbau befestigt sein, durch die Auslenkbewegungen in Achsrichtung der Laufrolle 2 in geeigneter Weise begrenzt werden können.

In Fig.3 ist schließlich veranschaulicht, wie zwei Laufrollen 2 mit ihren Tragkonstruktionen 8 zu einer Laufrollenstation zusammengeordnet sein können. Sie sind dabei symmetrisch zu beiden Seiten der vertikalen Längsmittelebene 3a des abzustützenden Drehrohres 3 angeordnet und wirken mit derselben Umfangslauffläche bzw. mit demselben Laufring 4 zusammen. Damit bilden zwei der oben anhand der Fig.1 und 2 erläuterten Laufrollenlagerungen 1 in symmetrischer Weise paarweise zusammengeordnet eine solche Laufrollenstation. Jede dieser beiden Laufrollenlagerungen 1 ist dabei über ein eigenes Gelenkgetriebe 10 unabhängig auf einem Fundament kippbeweglich abgestützt, und zwar vorzugsweise über je eine Fundamentplatte 9. Wichtig ist hierbei jedoch, daß die beiden Laufrollen-Tragkonstruktionen 8 durch wenigstens ein Abstandselement 17 verbunden sind, durch das ein gleichbleibender Abstand zwischen diesen beiden Tragkonstruktionen 8 und somit insbesondere zwischen den beiden von ihnen getragenen Laufrollen 2 aufrechterhalten wird und Spreizkräfte durch die senkrechte Gewichtsbelastung der beiden Laufrollen 2 durch das Drehrohr 3 aufgenommen werden. Damit hierbei die unabhängige Kippbeweglichkeit jeder Laufrollenlagerung 1 gewahrt bleibt, weist das Abstandselement 17 an seinen Verbindungsstellen mit den Tragkonstruktionen 8 zweckmäßig Verbindungsgelenke 17a, 17b auf.

Anhand der Darstellungen in den Fig.2 und 3 läßt sich ferner erkennen, daß jede Schwinge 11, 12 zweckmäßig in Form eines quer zur Laufrollen-Drehachse 2c ausgerichteten, vorzugsweise profilierten Längsträgers (z.B. Doppel-T-Träger) ausgebildet ist. Die Gesamtlänge dieser die Schwingen 11, 12 bildenden Längsträger (in Querrichtung zur Laufrollendrehachse 2c) richtet sich zweckmäßig nach der jeweiligen Konstruktion und Anordnung der Laufrollenlagerung 1 bzw. der daraus gebildeten Laufrollenstation.

## Patentansprüche

1. Kippbewegliche Laufrollenlagerung für die Anstützung eines Drehrohres (3), enthaltend
a) eine frei drehbar gelagerte Laufrolle (2), auf deren Außenumfangsfläche (2a) sich eine Umfangslauffläche (4, 4a) des Drehrohres (3) drehend abstützt,
b) eine die Laufrolle (2) über eine Rollenachse (5) tragende Tragkonstruktion (8), die ihrerseits gegenüber einer ortsfesten Stützfläche (9) kippbeweglich abgestützt ist,
dadurch gekennzeichnet, daß
c) die kippbewegliche Abstützung in Form eines viergliedrigen Gelenkgetriebes (10) mit der Tragkonstruktion (8) und der ortsfesten Stützfläche (9) sowie zwei gelenkig dazwischen angebrachten, kurbelarmigen Schwingen (11, 12) ausgebildet ist, wobei die beiden Schwingen derart angeordnet sind, daß der Drehpunkt (13) des Gelenkgetriebes (10) im Bereich des Schnittpunktes der Kontaktlinie (14) zwischen Laufrollen-Außenumfangsfläche (2a) und Drehrohr-Umfangslauffläche (4, 4a) mit der vertikalen Laufrollen-Mittelachse (2b) liegt.

2. Laufrollenlagerung nach Anspruch 1, dadurch gekennzeichnet, daß die Schwingen (11, 12) durch einzelne Tragstützen gebildet sind und an ihren freien Enden Schwenkgelenke (11a, 11b, 12a, 12b; 11a', 11b', 12a', 12b') aufweisen, über die sie jeweils einerseits mit der Laufrollen-Tragkonstruktion (8) und andererseits mit der ortsfesten Stützfläche (9) gelenkig verbunden sind.

3. Laufrollenlagerung nach Anspruch 2, dadurch gekennzeichnet, daß jede Schwinge (11, 12) in Form eines quer zur Laufrollen-Drehachse (2c) ausgerichteten, vorzugsweise profilierten Längsträgers ausgebildet ist.

4. Laufrollenlagerung nach Anspruch 2, dadurch gekennzeichnet, daß die Schwenkgelenke (11a, 11b, 12a, 12b) an den Schwingen (11, 12) wenigstens zum Teil durch Wälz-, Gleit- und/oder Elastomerlager gebildet sind.

5. Laufrollenlagerung nach Anspruch 2, dadurch gekennzeichnet, daß die Schwenkgelenke (11a', 11b', 12a', 12b') an den Schwingen (11, 12) wenigstens zum Teil in Form von elastischen Lagerpaketen ausgebildet sind.

6. Laufrollenlagerung nach Anspruch 2, dadurch gekennzeichnet, daß die Schwingen (11, 12) in Bezug auf das durch das Gelenkgetriebe (10) gebildete Koppelviereck gleich große Längen aufweisen und in ihrer Grundstellung unter gleichen Winkeln (α) derart gegeneinander geneigt sind, daß ihre gedachten Verlängerungslinien (11', 12') sich im Drehpunkt (13) des Gelenkgetriebes (10) schneiden.

7. Laufrollenlagerung nach Anspruch 1, dadurch gekennzeichnet, daß die Laufrollen-Tragkonstruktion (8) durch eine die Laufrollenachse (5) über zwei Lager (6, 7) abstützende, profilrahmenartige Unterstützungskonstruktion und die ortsfeste Stützfläche durch eine Fundamentplatte (9) gebildet ist.

8. Laufrollenlagerung nach Anspruch 1, dadurch gekennzeichnet, daß auf der ortsfesten Stützfläche (9) zwischen den beiden Schwingen (11, 12) die Auslenkbewegungen in Achsrichtung der Laufrolle (2) begrenzende Stützen (15, 16) befestigt sind.

9. Laufrollenlagerung nach Anspruch 1, wobei zwei Laufrollen (2) mit ihren Tragkonstruktionen (8) zu einer Laufrollenstation zusammengeordnet sind, indem sie symmetrisch zu beiden Seiten der vertikalen Längsmittelebene (3a) des abzustützenden Drehrohres (3) liegen und mit derselben Umfangslauffläche (4, 4a) zusammenwirken, dadurch gekennzeichnet, daß die beiden Laufrollen-Tragkonstruktionen (8) durch wenigstens ein Abstandselement (17) zur Aufrechterhaltung eines gleichen Abstandes miteinander verbunden sind.

10. Laufrollenlagerung nach Anspruch 9, dadurch gekennzeichnet, daß das Abstandselement (17) an seinen Verbindungsstellen mit den Laufrollen-Tragkonstruktionen (8) Verbindungsgelenke (17a, 17b) aufweist.
